# EUROPÄISCHE PATENTANMELDUNG

(11) **EP 1 857 154 A1**
(43) Veröffentlichungstag der Anmeldung: **21.11.2007**
(21) Anmeldenummer: 06009936.3
(22) Anmeldetag: 15.05.2006
(51) Int. Cl.: A63B 51/00

(54) **Schlägerbespannungs-Messgerät von Ballschlägern**

(71) Anmelder: Brunner, Adolf, 5550 Radstadt (AT)
(72) Erfinder: Brunner, Adolf, 5550 Radstadt (AT)
(74) Vertreter: Termin, Erich

(57) **Zusammenfassung**

1. Schlägerbespannungs-Messgerät zur Festlegung und Erfassung der Bespannungshärten und deren Bespannungselastizität von Ballschlägern zur Ausübung des Ballsports die aus einem Handgriff und einem eine Fläche begrenzendem Rahmen bestehen, der mittels Kabeln sogennanden Saiten bespannt ist wobei die Bespannung aus einem Maschennetz von quadratischen Löchern besteht das einem Spielball die erforderliche elastische Widerstandsfläche bietet und dessen Maschenweite so gestaltet ist, daß der Luftwiderstand beim Schlagschwung möglichst niedrig ist, sowie das Messgerät auch für die Messung und Festlegung bzw. Controlling von Spielbällen geeignet ist und sich generell in einem Gehäuse ohne Zusatz von Gegenelementen für dem Messgang befindet in dem durch drücken auf das Messgerät die Messung vollautomatisch vorgenommen wird und die Messgenauigkeit, die Einfachheit der Messung, sowie die kurze Messzeit von besondere Bedeutung sind und während dem Messvorgang alle Meßstrecken auf mechanischen Block =Fixbegrenzung gefahren werden und dadurch optimale Messgenauigkeit erzeugen und die vollautomatische Justiervorgänge und Vorspanndruck die zur Überwindung von verschiedenen Rahmenhöhen der Schläger und Unebenheiten der Bespannungsflächen in einem Messgerät integriert mechanisch sowie elektronisch funktionell sind,
dadurch gekennzeichnet,
A. dass die im direkten Zusammenhang bestehende Bespannungshärte und die Bespannungseiastizität parallel oder hintereinander durch Druck von Hand oder von motorgetriebenen Druck auf das Ballschlägerbespannungs-Messgerät gemessen wird.
B. das Messgerät in einem Gehäuse, die automatisch veränderbare Vorlaufstrecke, die automatische Justage der Vorlaufstrecke, den automatischen Vorspanndruck vor Messung mit der automatischen Einleitung des Hauptmessganges für die Messung der Bespannungshärte und des Dehnungskoeffizienten und dem Abspeichern aller Daten dieser Messungen elektronisch oder rein mechanisch in sich vereint.
C. das Messgerät aus Bauelementen und Bauelementegruppen besteht

Methode beziehungsweise Verfahren zur Ermittlung der Schlägerbespannungshärte und Bespannungselastizität mittels dem Messgerät laut Anspruch 1.

## Beschreibung

Die Erfindung betrifft ein Gerät zur Kontrolle der Bespannung, insbesondere der Bespannungshärte und der Bespannungselastizität von Ballschlägern, vorzugsweise Tennisschlägern, die aus einem Handgriff und einem eine Fläche eingrenzendem Rahmen bestehen, der mittels Kabeln, sogenannten Saiten, bespannt ist die innerhalb der Rahmenabgrenzung so verflochten sind, dass sie ein quadratisches Maschennetz bilden, das einem Spielball die notwendige Auflagefläche bietet und andererseits die Maschenweite so gestaltet ist dass der Luftwiderstand beim Schlagschwung möglichst niedrig ist

Bekannte Geräte zum Messen der Schlägerbespannungshärte sind entweder zu groß und deshalb unhandlich und kompliziert in der Anwendung, oder zu ungenau in der Messwerterfassung.

So werden beispielsweise die Schlägerrahmen auf eine Auflagefläche gelegt und die Bespannung (das Maschennetz) wird mittels Gewichten belastet.
Aus der Belastung bis zu einem Anschlagpunkt wird über eine Umrechnungstabelle die Schlägerbespannungshärte ermittelt (DE-OS 29 16 735).

In der EP-OS 0 257 627 wird eine Vorrichtung zur Prüfung der Bespannungshärte beschrieben. Dies ist zwar das erste handliche Gerät zur Messung der Bespannungshärte. Da bei diesem Gerät die Messwertermittlung mittels einer komprimierbaren Feder, die über eine Andruckplatte gegen die Bespannung gedrückt wird, erfolgt, ist die zurückgelegte Wegstrecke, die die Mess-strecke bedeutet, zu gering.
Dies vor allem weil das Gerät klein gehalten werden muß. Aus diesem Grunde werden nur Werte der Bespannungshärte im Kilopoundbereich ermittelt.

Unebenheiten im Bereich der Saitenkreuzpunkte der Rahmenbespannung führen zu Fehlmessungen.
Ebenso ist die Bespannungshärtemessung bei Anwendung von sogenannten Saitenschonern, die immer häufiger verwendet werden, problematisch.

In der US-PS 4 794 805 wird ein ähnliches Gerät beschrieben, das auch auf der Basis der Messwertermittlung mittels einer komprimierbaren Feder arbeitet und somit mit entsprechenden Unzulänglichkeiten, wie das der EP-OS 0 257 627 behaftet ist. Vor allem werden mit diesem Gerät nicht die Messvorlauffehler aufgefangen und bei der Messwertermittlung kompensiert.

In WO 86-01596 wird ein Gerät zur Messung der Schlägerbespannung beschrieben, wonach an mehreren Punkten der Bespannung eine Messung erfolgt und danach ein Spannungs-Faktor ermittelt wird. Abgesehen davon, dass keine Direktanzeige des Bespannungswerts vorhanden ist, ist das Gerät mechanisch mit soviel Gleitspietraum behaftet, dass die Messwerte, ohne Vorjustierung, lediglich Zirka-Werte darstellen.

Bei professionellen Spielern und solchen die den Tennissport öfters ausüben, ist der Schlagarm starken physischen Belastungen ausgesetzt. Es treten Gelenkentzündungen auf, man spricht vom Tennisarm.
Diese Unannehmlichkeiten können weitgehend gemildert werden, wenn die Schlägerbespannung inbezug auf Bespannungshärte und Bespannungselastizitat optimiert ist.
Die Bespannungshärte ist eine direkte Funktion der Zugkraft mit der die Saiten in den Schlägerrahmen eingezogen und fixiert werden.
Die Bespannungselastizität bedeutet das Rückstellvermögen der Schlägerbespannung in die Ausgangsbasis und hängt zum Teil von der Bespannungsart bei der Bespannung des Schlägers ab, überwiegend aber von der Qualität der Saiten.
Die Schlägerbespannung ist somit das wichtigste Element im Aufbau eines Ballschlägers.
Beim Tennisspiel sind die Bespannungshärte und die Bespannungselastizität von gleich hoher Bedeutung.
Die Bespannungshärte verändert sich nach der Neubespannung eines Ballschlägers relativ schnell,da sich die Bespannung statisiert. Sie beeinträchtigt, wenn zu hart oder zu weich, das Spielverhalten durch ein verändertes Ballgefühl.
Dasselbe gilt für die Bespannungselastizität Wenn diese in Abhängigkeit von der Saitenqualität drastisch abfällt.
Die Anforderungen an die Bespannungshärte und Bespannungselastizität sind sehr stark auf das Individuum ausgerichtet.
Es besteht deshalb das Bedürfnis diese Eigenschaften einer Ballschlägerbespannung auf den Eigenwert eines Spielers individuell einzustellen und je nach Bedarf zu kontrollieren.
Deshalb wird verlangt, dass ein handliches und einfach zu bedienendes Gerät, das beide Funktionen, die der Bespannurgshärteermittlung und Anzeige der Messwerte direkt und ohne Zuhilfenahme von Umrechnungstabellen, sowie die der Bespannungselastizitätsermittlung und Messung, erfüllt
Darüber hinaus wird verlangt, dass Messungen der Bespannungshärte auch bei verschiedenen Schlägergrößen und mit verschiedener Saitenbespannungsdichte direkt gemessen werden können.

Diesen Forderungen entspricht die vorliegende Erfindung. Der Vorteil der Erfindung liegt deshalb vor allem in der handlichen Gestaltung des neuen Gerätes.
Der äusserst spontanen Verfügbarkeit des Gerätes und der praktischen Darstellung der Messergebnisse per Digitalanzeige.

### Aufgabe der Erfindung

Der Stand der Technik basiert grundsätzlich auf der DE 91901742 und dem EP 530193. Die zitierten Referenzen lieferten das fortschrittlichste und bewährte Raketenbespannungs-Meßsystem für den Tennissport. In der Praxis hat sich jedoch gezeigt, dass der breite problemlose Einsatz auf dem speziellen Einsatzgebiet nicht erzielt werden konnte.

Aufgabe der Erfindung ist es deshalb, eine Schlägerbespannungskontroller zu finden, der den in der Praxis, insbesondere des Tennisspiels, gestellten Anforderungen entspricht, nämlich der Messung der Bespannungshärte von Schlägern im einzelnen und der Messung der Bespannungselastizität von Schlägern in Kombination, mittels einunddemselben Gerät in einem darauffolgenden Arbeitsgang oder parallel gleichzeitig, sowie der Ermittlung der gezogenen Bespannungshärte- und Elastizität bei verschieden dimensionierter Schlägergrösse und verschiedener Saitendichte der Schlägerbespannung in Kombination. Darüberhinaus soll das neue Gerät eine hohe Messwertauflösung haben und unempfindlich sein gegen Einflüsse die im Spielbetrieb auftreten, wie unebene Bespannung des Schlägers, Unsymetrie der Seiten. Temperaturunterschiede und ähnliches. Die Maschendichte in Abhängigkeit von Schlägergrösse oder spezieller Bespannung, wie auch Mikrobespannung soll keine Rolle spielen.

Ferner ist es die Aufgabe der Erfindung, ein Schlägerbespannungskontrollgerät zu finden, das alle infrage kommenden Einflüsse auf die Messung, die zu Fehlmessungen führen könnten, durch eine Eigenjustierung eliminiert.

Ein Tennisspieler der im Wettkampf steht, oder sich auch nur normal auf dem Tennisplatz bewegt, hat oder nimmt sich nicht die Zeit eine innerliche Ruhe aufzubauen, um die dennoch notwendigen Messungen seiner Bespannungen auf dem Racket, mit dem bisherigen Meßsystem vorzunehmen.
Auch fehlt dem Tennisspieler in großem Ausmaße, in der Ausübung seiner Freizeit Gestaltung, der Wille ein Gespür für ein technisches Gefühl zum genauen justieren von Messvorgängen zu entwickeln. Dies gilt auch dann, wenn er die Messungen dringend benötigt.

Nach dem Stand der Technik sind folgende systembedingte Messvorgänge erforderlich;
1.) Gegenstück zum Messteil auf der Schlägerbespannung zentral montieren.
2.) Messteil auf das Gegenstück montieren.
3.) Genaue Vorjustage für den eigentlichen Messvorgang.
4.) Gedankliches Festhalten der Vorjustage-Zahl
5.) Messvorgang mit ganz genauer Umdrehung des Messknopfes auf die VorJustage- Zahl
6.) Messergebnis ablesen.
7.) Nochmalige Wiederholung des Messvorganges um eventuelle persönliche Messfehler auszuschließen.
8.) Messergebnis ablesen
9.) Messgerät vom Racket demontieren
10.) Gegenstück von der Bespannung demontieren.

### Aufgabenlösung der Erfindung

Die Aufgabenstellung wurde gelöst durch ein Schlägerbespannungs-Meßgerät nach Anspruch1.
Das neue Schlägerbespannungs-Meßgerät überwindet die gemäß der Aufgabenstellung aufgezeigten Probleme und beseitigt diese vollständig.

Erfindungsgemäß entfallen folgende systembedingte Vorgänge
1.) Keine Montage
2.) Keine Vorjustage durch eigenes Zutun
3.) Keine Messjustier-Vorgänge durch eigenes Zutun
4.) Kein sich merken von Justierzahlen durch eigenes Zutun
5.) Keine spezielle Messkonzentration für Messvorgänge notwendig
6.) Kein Montageabbau.

Das Funktionsprinzip des neuen Messgerätes ist denkbar einfach zu handhaben.
Das Messgerät wird auf den Ballschlägerkopf gelegt. Mit der Hand auf die Drucktaste drücken bis zum Signalton. Es erscheint das Messergebnis.

Ein weiterer bedeutender Vorteil der Patenanmeldung ist:
Zur Korrektur von _{"}nach unten gefallenen" Racketbespannungen werden in Zukunft am inneren Rande des Schlägerkopfes, an den Kreuzpunkten der Saiten unterschiedlich hohe Kunststoffteile eingesetzt. Somit kann ein Bespannungshärte- Rückgang (ohne Neubespannung) sofort nach oben korrigiert werden. Durch das einsetzen der Bespannungshärte-Korrekturelemente ist die notwendige genaue Auflagefläche des Messringes nicht mehr gesichert und somit können nur entweder die Korrekturelemente oder nur die Messvorgänge, eines von beiden zur Anwendung Kommen.
Die Erfindung läßt beides zu, da der Gegendruck aus dem Schlägerrahmen kommt und oder dieser sich in einem Gerät mit automatischer Fixierung des Vorlaufweges befindet.
A.) dass die in direktem Zusammenhang stehende Schlägerbespannungshärte, im Einzelnen und die der Schtägerbespannungsetastizität in einer Prozedur parallel oder hintereinander gemessen wird, und das Gerät bis zum Beginn der eigentlichen Kontrollmessung, vorhandene Vorlaufunregelmäßigkeiten durch eine dem eigentlichen Messvorgang vorgespannte automatische Eigenjustierung eliminiert, und die Kontrollmesswertermittlung durch die Erfassung von Druck auf das Messobjekt erzeugte Spannkraft Erfolgt und
B.) die verschiedenen Gerätemöglichkeiten aus nachfolgenden Bauelementen bzw. Bauelementgruppen die in jeweils einer Einheit "in einem Gerat" ohne weitere Zusatzeinrichtungen bestehen.

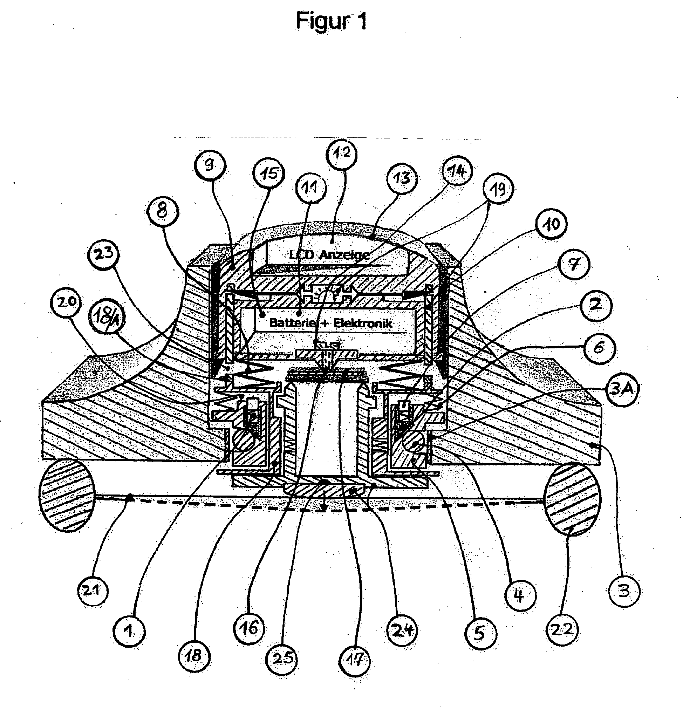

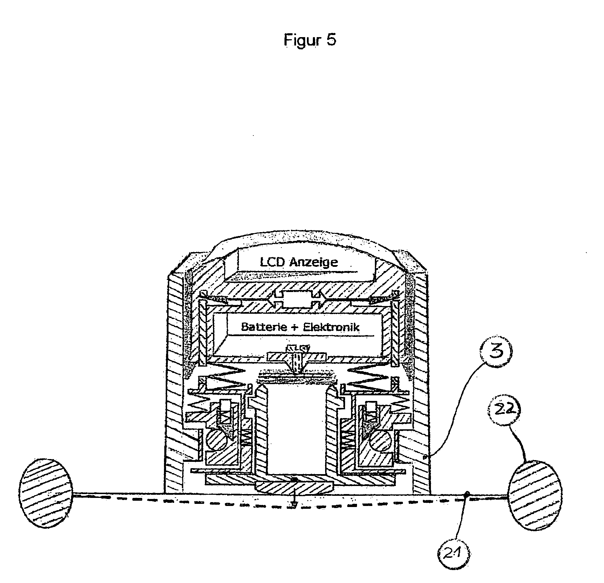

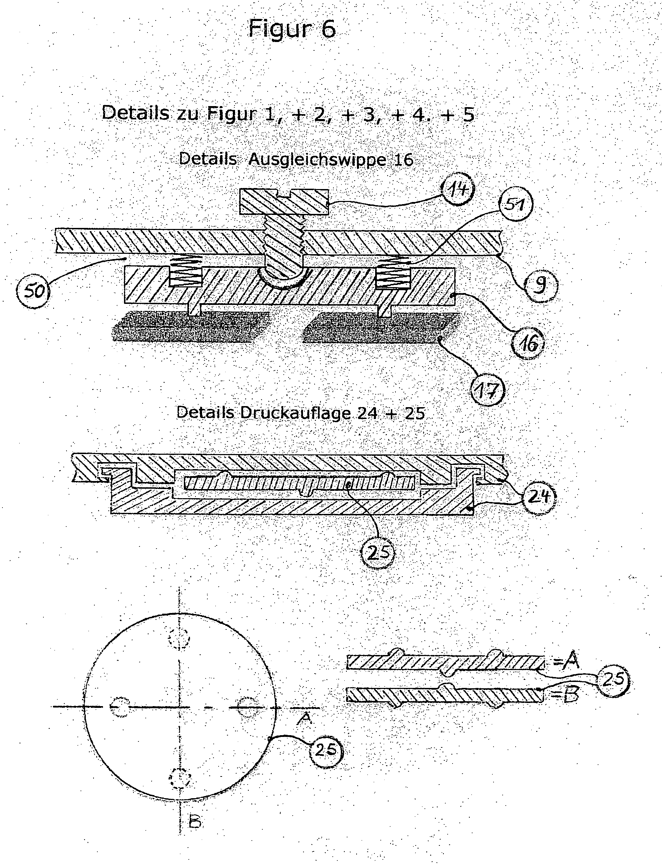

### Detailierte Funktion- und Systembeschreibung mit den Figuren 1 bis 6

Grundsätzlich wird zur Messung der Bespannungshärte der Ballschlägerkopf auf einen flachen, harten Untergrund gelegt.
Figur 1 zeigt:
   1.) Das Gehäuse (3) wird mittig auf den Racketrahmen (22) aufgelegt. Eine Orientierungshilfe für eine mittige Auflage wird konstruktiv gelöst.
   2.) Mit der mittigen Auflage des Rackomat 1 auf dem Rahmen. (22) des Tennisschlägers ist der Start für den Messvorgang vorbereitet.
   3.) Der einfache Meßvorgang (ohne Detailbeschreibung der mechanischen und oder elektronischen
      a.) Vorgänge inner- halb des Meßsystem
      b.) Den Rackomat auf den Schlägerkopf = Racket legen.
      c.) Auf den Druckknopf (9) drücken bis ein Signalton = (Messung votlzogen) ertönt
      d.) Den Rackomat vom Schläger nehmen.
      a.) Auf der Elektronikanzeige (12) ist beim dem Rackomat 1 und 2 sofort die Bespannungshärte sowie auf dem Rackomat 2 zusätzlich die Dehnfähigkeit der Bespannung = Tennissaiten gespeichert und ablesbar. Diese Anzeigen werden nach 10 sec. automatisch gelöscht. Der gesamte Messvorgang bewegt sich innerhalb von 5 sec.
   4.) Als erstes wird über die Position (19) die veränderbare Wegstrecke (23) für die zu messende SchlägerKopfgröße des Tennisrackets eingestellt und oder mechanisch programmiert.
   5.) Auf den Druckknopf (9) bis zum Ende der Messung "und bis zum ertönen eines Signal" immer ohne Unterbruch drücken
      A.) Bei der Auflage des Messgerätes (3) auf dem Schlägerrahmen (22) wird über die Feder (8) das Funktionsverbindungsteil (18) auf die Druckauflage (24+25) gedrückt, so daß die Duckauflage (24+25) auf der Bespannung (21) aufliegt.
         Während dem gesamten Messvorgang sind innerhalb des Messgerätes 4 Wegstrecken zu überwinden, die Meßstrecke (20) über die Feder (6), die Meßstrecke (23) über die Feder (8) und die Messtrecke (50) über die Feder (51) sowie der Vorlauf über die Feder(18B)im Teil (18)
      B.) Beim Fortschreiten des Messvorganges wird über den Druck auf das Teil (9) die Feder (8) das Verbindungsteil (18) auf die Druckauflage (24+25) gedrückt wobei nachfolgend durch das Überwinden der Druckfeder (6) die Wegstrecke (20) geschlossen wird so, daß während diesem Vorgang das Verbindungsteil (18) auf das Funktionsteil (7) auffährt und das Klemmteil (2) über die Feder (1) und die Klemmkugel (4) auf die Fixierbahn (3A) drückt und einen Klemmvorgang auf das Kunststoffgehäuse (3) ausübt.
         Damit ist parallel der Vorlaufweg (20) auf Block geschlossen und die Kugel (4) hat das Kunststoffteil (5) für die Höhenverstellung zwischen dem Gehäuse (3) und dem Racketrahmen (22) fixiert un geblockt, wobei die Feder (6+18B) den aufgebauten Druck auf das Auflageteil (24+25) und somit auf die Racketbespannung (21) abgibt.
         Dieser Druck von der Feder (6+188) und der Druck aus der Feder (51) bringt die notwendige Vorspannung für die Vorjustage über das Auflageteil (24+25) auf die Racketbespannung (21) für den nachfolgenden Hauptmessgang c.
      C.) Der eigentliche Messvorgang beginnt wenn die Position (B) ausgeführt ist, und die Mess-strecke (20) durch das Blocken des Kunststoffteiles (5) für die Höhenverstellung fixiert ist, und durch weiteres drücken auf die Drucktaste (9) und das Auffahren der Drucktaste (9) über die Wegstrecke (50) auf die Ausgleichswippe (16) getätigt ist.
      Nun wird der Gegenruck zwischen den Elementen der Racketbespannung (21) über die Druckaufauflage (24) sowie Ausgleichswippe (25) direkt auf die geeichten Blattfedern mit den aufgebrachten Dehnungsmeßstreifen (17) übertragen und der eigentliche Messgang eingeleitet.
      Dieser Messvorgang bleibt durch immer währendes Drücken auf die Drucktaste (9) solange aktuell erhalten bis die Meßstrecke (23) geschlossen ist, und die Einstellvorrichtung für die Schlägerkopfgröße (19) auf den Sensor (18A) und dem Verbindungsteil (18) " Auf und Block" fährt, der das Ende aller Weg- und Meßstrecken bedeutet sowie daß der Meßvorgang über alle erwähnten Teile von (1-25) abgeschlossen ist.
      Der veränderte Widerstand durch die Biegung des Dehnungsmeßstreifens,im Meßstreifen (17) selbst, aus dem Gegendruck der Druckauflage (24+25) und dem Gegendruck vom Teil (9) wird dieser veränderbare Widerstand durch unterschiedliche Biege-Wege (aus diesem Biege-Vorgang) verursacht, elektronisch im Teil (15) ausgewertet und in Kp über den durchsichtigen Kunststoff (13) sichtbar und ablesbar gemacht.
   6.) Der gesamte Vorgang des Messens ist in 2-5 Sekunden abgeschlossen. Die notwendige Genauigkeit des Messvorganges wird durch das auf mechanischem Block fahren der Messwegstrecken (20)+(23)+(50) absolut sicher erreicht und für den Messenden sicher gestellt ohne , daß aufwendige Vorjustierungen und System-Aufbauvorgänge zum voraus notwendig sind.

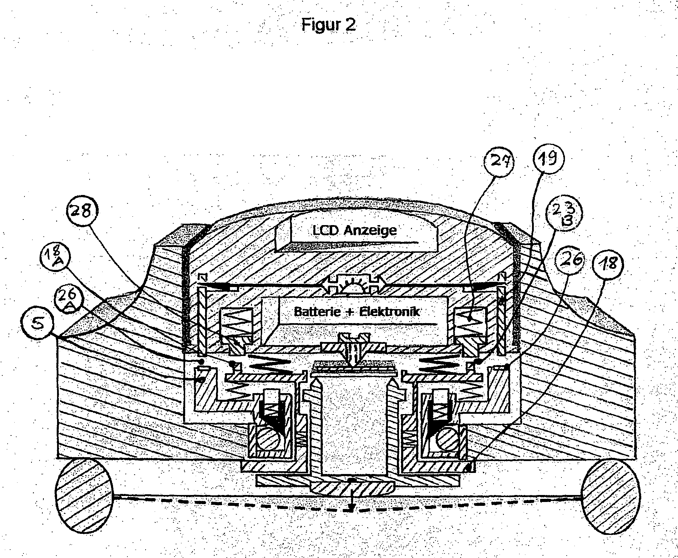

Figur 2 zeigt:
   1.) Das unter der Figur 2 zu beschreibende Messgerät gleicht dem der Figur 1, bis auf den erweiterten Meßvorgang" (26)+(27)+(28)+(26A)+(23B)+(18A)" zur Messung des Dehnungskoeffizienten der Tennissaiten der Bespannung (21).
   2.) Die Gesamt - Weg - Meßstrecke (238) ist in der Figur 2 zwischen der Einstellvorrichtung der zu messenden Schlägerkopfgröße (19) mit dem Auffahrteil (5) und Sensor (26) über eine größere Wegstrecke (26A) welche auch den Nachlaufweg (27+(28) berücksichtigt, angebracht.
   Die Endstufe zur Messung der Bespannungshärte ist so gehalten das diese zwischen dem Funktionsteil (18+18A) und den Messweg (23B) und dem Nachlaufstreckenteil (28) stattfinden wird.
   Bei der Messung des Dehnungskoeffizienten der Bespannung (21), nach der Messung der Bespannungshärte (nach Position 2), werden aus dem Gesamtweg Weg (26A) die
   Teile (19 und 26) gegenseitig auf mechanischen Block gefahren, und das Ende der Gesamt - Messung der Elektronik durch den Sensor übermittelt.
   Bei diesem Vorgang ist das Ganze so gehalten, daß der in sich geschlossene Teil(18A+28) über die Feder (27) die notwendige Nachlaufstrecke zur Messung des Dehnungskoeffizienten über die längere Wegstrecke (26A) zulässt.
   Die Messergebnisse des Dehnungskoeffizienten sind über die Auswertung in der Elektronik (15) über das Teil (12) ablesbar.

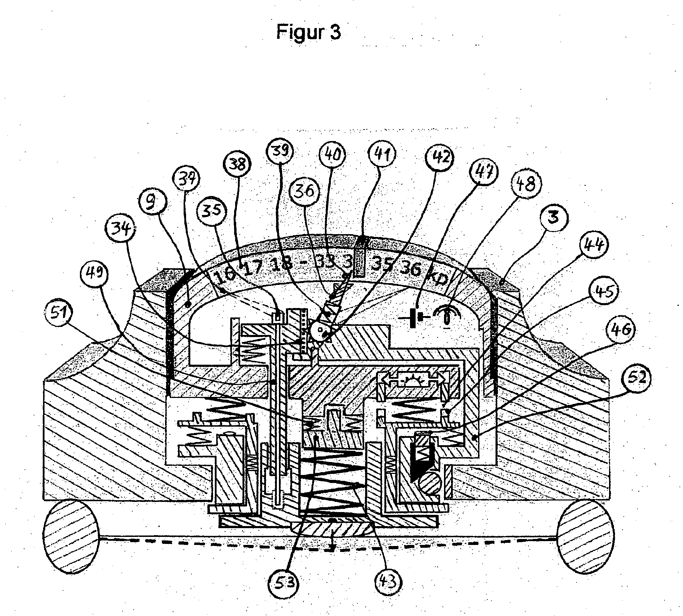

Figur 3 zeigt:
   1.) Das unter der Figur(3) zu beschreibende Messgerät gleicht funktionsmäßig im Vorspann und in der Vorjustage in den Positionen (1,2,3,4,5,6,7,8,9,18,20,224,25,51) dem Messgerät der Figur(1).
   2.) Der Meßvorgang beginnt, wie sie bei der Figur(1) in den Positionen(1-5) dargestellt wurde bis auf die Änderung in der Position(3d), da wird in der Figur 3 die Bespannungshärte der Bespannung (21) über die Anzeigekralle (41) abgelesen. Messzeit ebenfalls innerhalb 5 Sekunden.
      Die Position (4) aus der Figur(1), die Einstellung der Schlägerkopfgröße (19) sowie der beginnende Messvorgang aus der Position (5) jetzt nachkommend in der Figur(3) Position (3) beschrieben ist gleich bleibend.
   3.) Auf den Druckknopf (9) bis zum Ende der Messung "und bis zum ertönen eines Signal" immer ohne Unterbruch drücken.
      A.) Bei der Auflage des Messgerätes (3) auf dem Schlägerrahmen (22) wird über die Feder (8) das Funktionsverbindungsteil (18) auf die Druckauflage (24+25) gedrückt, so daß die Duckauflage (24+25) auf der Bespannung (21) aufliegt.
         Während dem gesamten Messvorgang sind innerhalb des Messgerätes 4 Wegstrecken zu überwinden, die Meßstrecke (20) über die Feder (6), die Meßstrecke (44) über die Feder (8), und die Messtrecke (50) über die Feder (51) sowie der Vorlauf über die Feder (18B) im Teil (18).
      B.) Beim Fortschreiten des Messvorganges wird über den Druck auf das Teil (9) die Feder (8) das Verbindungsteil (18) auf die Druckauflage (24+25) gedrückt wobei nachfolgend durch das Überwinden der Druckfeder (6) die Wegstrecke (20) geschlossen wird so, daß während diesem Vorgang das Verbindungsteil (18) auf das Funktionsteil (46) auffährt und das Klemmteil (2) über die Feder (1) und die Klemmkugel (4) auf die Fixierbahn (3A) drückt und einen Klemmvorgang auf das Kunststoffgehäuse (3) ausübt.
         Damit ist parallel der Vorlaufweg (20) auf Block geschlossen und die Kugel (4) hat das Kunststoffteil (5) für die Höhenverstellung zwischen dem Gehäuse (3) und dem Racketrahmen (22) fixiert und geblockt, wobei die Feder (6) den aufgebauten Druck auf das Auflageteil (24+25) und somit auf die Racketbespannung (21) abgibt.
         Dieser Druck von der Feder (6) und der Druck aus der Feder (51) bringt die notwendige Vorspannung für die Vorjustage über das Auflageteil (24+25) auf die Racketbespannung (21) für den nachfolgenden Hauptmessgang (C.)
      C.) Der eigentliche Messvorgang beginnt wenn die Position (B) ausgeführt ist, und die Mess-strecke (20) durch das Blocken des Kunststoffteiles (5) für die Höhenverstellung fixiert ist, und durch weiteres drücken auf die Drucktaste (9) und das Auffahren der Drucktaste (9) über die Vorlaufstrecke der Feder (51), getätigt ist.
         Es wird der Druck über die Drucktaste (9) und über die geschlossene Feder (51) auf das Gegenstück (53) und mit der Druckauflage (24+25) gegenüber der Bespannung (21) ein Messdruck erzeugt welcher solange weitergeführt wird bis die Voraustrecke (44) überwunden ist, und der (Elektro-Kontakt) Sensor (45) mit der Position (19) auf Block gefahren ist.
      d.) Das Messende wird über das Auffahren der Positionen (19) und (45) mechanisch erreicht und durch den Sensor ((45) über die Batterie (47) und dem Signalgeber (48) durch ein Signalton dargestellt.
      e.) Die veränderte Wegstrecke die sich aus dem Teil (24+25) und (49) durch den Druckaufbau der Feder (43) auf das mit der Kugel (4) fixierte Teil (52) ergibt, wird als Meßstrecke über das Zahnrad (42) auf die Schiebevorrichtung (36) und danach auf die Anzeige-Messkralle (41) übertragen. Das Zahnrad (42) und die Längenausgleichsfeder (39) sowie die Schiebevorrichtung (36) sind mit dem Verbindungsteil (52) (bei der Figur1=(5) fix verankert.
   Der auf dem Funktionsteil (49) fixierte Längs-Zahnbolzen (34) überträgt die entstandene Wegstrecke aus der Auflagefläche (24+25), dem Justierelement (49) auf das Teil(52) als Meßstrecke zum Zahnrad (42). Somit ist die Funktion für den rein mechanisch und vollautomatischen Messvorgang in einem Messgerät ereicht.

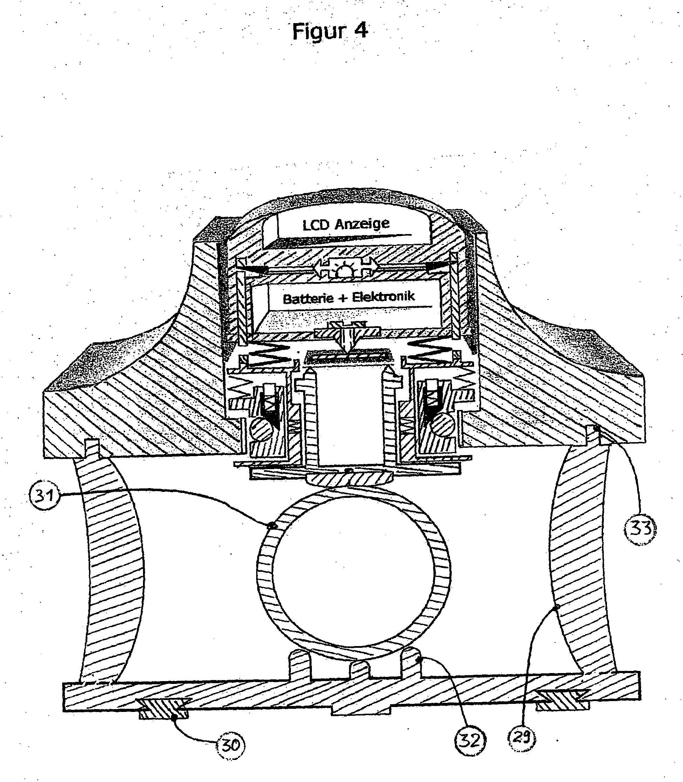

Figur 4 zeigt:
   Das Messgerät Figur (4) entspricht dem der Figur (1) und ist über die Elemente (29), (30), (31), (32) und (33) zum Tennisball-Messgerät erweitert. Die Teile 29-30-32 und 33 dienen zur Aufnahme des Tennisballes (31) sowie mit als Gegendruck durch die Positionen (32) + (31) auf die Druckauflage(24+25).
   Bei den Unterschiedlichen Fabrikate und deren Sorten von Tennisbällen, wird der als gut befundene empirisch ermittelte maximale und minimale Gegendruck der einzelnen Tennisbälle in einer Tabelle über das Messgerät Figur (1) festgelegt um dies dann wiederum über das Messgerät Figur (1) nachzumessen.
Figur 5 zeigt:
   Dieses Messgerät ist dem der Figur (1) gleich bleibend, bis auf die Änderung des Gehäuses (3) welches nicht auf dem Tennisrahmen (22) sondern sondern direkt auf der Bespannung (21) aufliegt
Figur 6 ist eine Detail-Darstellung der Druckauflage (24+25) und der Ausgleichswippe (16)

### Bezugszeichen - Liste für Figur 1, 2, 3, 4, 5 und 6

1 = Abfederung für Höhenverstellung und Vorlaufweg
2 = Klemmteil bei Höhenverstellung
3+3A = Kunststoffgehäuse und gehärtete Fixierbahn für Klemmkugel
4 = Klemmkugel für Fixierung der Höhenverstellung
5 = Kunststoffteil für komplette Höhenverstellung für die unterschiedlichen Rahmenhöhen der Tennisschläger
6+8= Druckfedern unterschiedlicher Spannkraft für Vorlaufweg und Vorjustage des gesamten Messvorganges
7 = Funktionsteil und Sensor für die Vorlaufwegbegrenzung und Einschalten der Elektronik
9 = Drucktaste (Auslösung des Messvorganges)
10 = Gleitbahn für Drucktaste
11 = Raum für Elektronik und Batterie
12 = Raum für Elektronik-Anzeige
13 = Durchsichtige Kunststoffabdeckung
14 = Justierschraube der Druckübertragung zum Dehnungsmeßstreifen und Startpunkt-Einstellung für den Meßvorgang
15= Raum für Elektronik
16 = Ausgleichswippe für die Druckübertragung
17 = Geeichte Blattfedern mit aufgebrachten Dehnungsmeßstreifen
18 = +18A, + 18B, = Funktionsverbindungsteil für Vorlaufweg und Meßstreckenbegrenzung mit Sensor 18A sowie Feder 18B für System-Vorlaufweg
19 = Einstellvorrichtung für Racket-Kopfgröße = Meßstreckenveränderung
20 = Wegmeßstrecke für Vorjustage und Elektronik-Aktivierung
21 = Racket-Bespannung
22 = Racketrahmen ( unterschiedlicher Höhe und Stärke)
23+26A = Gesamtwegmeßstrecke = plus Elektrischer und mechanischer EndBlockade aller Drucksysteme für Messvorgänge
23B = der Figur 2, ersetzt die elektrische Funktion von 23, in der Figur 1
24 = Druckauflage des Meßsystems auf der Racketbespannung
25 = Ausgleichswippe für Druckübertragung auf die Racketbespannung
26+19 Mechanische Endblockade der gesamten Meßwegstrecke (Figur1) plus Elektronikkontakt (Sensor) für das Ende der Messung der TennisSaiten Dehnungskoeffizienten (Figur 2)
26A Wegmeßstrecke für Dehnungskoeffizienten
27 = Federsystem für Nachlaufstrecke zur Messung Des Dehnungskoeffizienten
28 = Nachlaufstrecken- Funktionsteil für die Messung des Dehnungskoeffizienten (nach dem Meßvorgang der Bespannungshärte)
29 = Gehäuse für Tenniball-Controller
30 = Gummiauflagestopfen für die Rutschfestigkeit des Systems
31 = Tennisball
32 = Gegendruckauflage und Zentrierung des Tennisballes
33 = Fixierelement für Messgerät und Tennisballgehäuse
34 = Zahnbolzen für die Übertragung der Meßstrecke auf das Skalenband
35 = Justiervorrichtung (Schraube) für die Vorjustage der Messanzeige
36 = Bewegliche in sich federnde Schiebevorrichtung für die Bewegung der Messanzeigekralle (41)
37 = Startjustierpunkt für das Skalenband = Mess-System geeichte Anzeige in Kp
38 = Geeichte Anzeige des Messergebnisses in Kp
39 = Längenausgleichsfeder für Schiebevorrichtung 36
40 = Position 36 schiebt 41 bis in die Endposition zu Kraftschluss 44-45
41 = Anzeigekralle nach dem Messen rückstellbar
42 = Zahnrad für Meßstreckenübertragung auf Anzeigefeld
43 = Lineare Druckfeder für das Auslösen unterschiedlicher Messstrecken je nach Gegendruck und Laufwege
44 = Vorgabestrecke zur Festlegung des eigentlichen Meßblockvorganges
45 = Elektroblockkontakt (Sensor)für Wegstreckenbegrenzung (Signalton)
46 = Automatische Vorjustagestrecke für Meßvorgang
47 = Batterie für Elektronik und Signalgeber
48 = Signalgeber = Summer
49 = Justierelement = Funktionsverbindungsteil für die Einstellung der Messanzeige
50 = Wegstrecke für Justierung der Mess-Druckübertragung
51 = schwache Vorspannfeder für Justiervorgang
52 = Kunststoffteil für komplette Höhenverstellung der unterschiedlichen Rahmenhöhe der Tennisschläger
53 = Gegenstück für die Aufnahme der Feder (51) Figur 3

## Patentansprüche

1. Schlägerbespannungs-Messgerät zur Festlegung und Erfassung der Bespannungshärten und deren Bespannungselastizität von Ballschlägern zur Ausübung des Ballsports die aus einem Handgriff und einem eine Fläche begrenzendem Rahmen bestehen, der mittels Kabeln sogennanden Saiten bespannt ist wobei die Bespannung aus einem Maschennetz von quadratischen Löchern besteht das einem Spielball die erforderliche elastische Widerstandsfläche bietet und dessen Maschenweite so gestaltet ist, daß der Luftwiderstand beim Schlagschwung möglichst niedrig ist, sowie das Messgerät auch für die Messung und Festlegung bzw. Controlling von Spielbällen geeignet ist und sich generell in einem Gehäuse ohne Zusatz von Gegenelementen für dem Messgang befindet in dem durch drücken auf das Messgerät die Messung vollautomatisch vorgenommen wird und die Messgenauigkeit , die Einfachheit der Messung, sowie die kurze Messzeit von besondere Bedeutung sind und während dem Messvorgang alle Meßstrecken auf mechanischen Block =Fixbegrenzung gefahren werden und **dadurch** optimale Messgenauigkeit erzeugen und die vollautomatische Justiervorgänge und Vorspanndruck die zur Überwindung von verschiedenen Rahmenhöhen der Schläger und Unebenheiten der Bespannungsflächen in einem Messgerät integriert mechanisch sowie elektronisch funktionell sind. **dadurch gekennzeichnet,**
A. **dass** die im direkten Zusammenhang bestehende Bespannungshärte und die Bespannungselastizität parallel oder hintereinander durch Druck von Hand oder von motorgetriebenen Druck auf das Ballschlägerbespannungs-Messgerät gemessen wird.
B. das Messgerät in einem Gehäuse, die automatisch veränderbare Vorlaufstrecke, die automatische Justage der Vorlaufstrecke, den automatischen Vorspanndruck vor Messung mit der automatischen Einleitung des Hauptmessganges für die Messung der Bespannungshärte und des Dehnungskoeffizienten und dem Abspeichern aller Daten dieser Messungen elektronisch oder rein mechanisch in sich vereint.
C. das Messgerät aus folgenden Bauelementen und Bauelementegruppen besteht;
a.) Einem Gehäuse (3) welches unter Anderem als Auflage zur Druckerfassung auf dem Schlägerrahmen (22) Figur (1) oder auf der Bespannung (21) Figur (5) aufgelegt wird
b.) Einem Druckelement (9) in welchem die Größe des zu messenden Schlägerrahmen (22) =Schlägergröße über die Einstellvorrichtung (19) festgelegt wird in dem Wegstrecke (23) Insgesamt verändert wird.
c.) Einem Federsystem ( 1,6,8,18B,51) unterschiedlichster Federkraft das sowohl die Vorspannung (vor dem eigentlichen Messvorgang) von dem Auflageteil (24+25) auf die Bespannung (21) und den Justiervorgang über das Funktionsteil ( 18,18B,7,,2,1) und (4) mit der Fixierbahn (3A) in einem Vorgang erfüllt.
d.) Einer Justierschraube (14) an der Drucktaste (9) angebracht, welche den beginnenden Messdruck auf die geeichte Blattfeder(17) mit dem aufgebrachten Dehnungsmeßstreifen für den Messgang im direkten Druckaufbau über die Aufiageteile (24+25) auf der Bespannung(21) einstellbar macht.
e.) Einem System 1 in dem die Feder (8) über das Verbindungsteil (18) mit der Feder (18B), der Feder (6) auf die Teile (3A,4,5,6,7) einwirkt so daß sich über die Meßstrecken (20 +50) und der Feder (18B) das Ganze mit dem Gehäuse (3A+3) fixiert.
f.) Einem System 2 das über die Feder (8), "nach der Fixierung des Systems 1 mit dem Gehäuse (3)" die Blattfeder (17), die Ausgleichswippe (16) und die Druckauflage ((24+25) auf der Bespannung (21) den eigentlichen "vom System 1 getrennten" Messvorgang gestaltet und diesen nach der Wegstrecke (23) mechanisch und elektronisch beendet.
g.) Einer mechanischen Vorrichtung zum Schutz der Überdehnung (Zerstörung) der geeichten Feder mit aufgebrachtem Dehnungsmeßstreifen (17) durch die maximale Gesamtweg-Begrenzung der Wegstrecke (23) über die Fixierung System 1.

2. Ballschlägerbespannungsmessgerät nach Anspruch 1, **dadurch gekennzeichnet, dass** sowohl die Bespannungshärte in der Erweiterung des Messvorganges die Bespannungselastizität gemessen bzw. ermittelt wird, in dem über den Vorlaufweg (23) die Messung der Bespannungshärte durch die Sensoren (18A) und dem Kontakt des Nachlaufsteckenteils (28) elektronisch abgeschlossen ist und über die Feder (27) den erweiterten Messgang für die Messung der Bespannungselastizität bis zum Auffahren der mechanischen Endblockade (26) auf das Teil (19) über die Meßstrecke (26A) ermöglicht wird und alle anderen Vorgänge des Patenanspruches 1 gleich bleibend sind und beide Messwerte die Bespannungshärte sowie die Dehnbarkeit der Tennissaiten (21) über die Elektronik ( 11, 12, 13 ) angezeigt werden

3. Ballschlägerbespannungsmessgerät nach Anspruch 1, **dadurch gekennzeichnet, dass** die Messung der Bespannungshärte bis zum elektronischen Signal des Messendes rein mechanisch vorgenommen wird wie in Anspruch 1 A,1B, und 1C, sich jedoch über das mechanische Hauptmess-System durch die Kennzeichnungen (35-53) erweitert und die nachfolgenden Positionen (a) und (b) mit folgenden Elementen
a.) Einer mechanisch und funktionell konstruktiv geänderten Drucktaste (9) welche über die Vorspannfeder (51) das Gegenstück (53) über die Drucktaste (9) auf mechanischen Block fährt und über die Feder (43) und der Druckauflage (24+25) den Messdruckaufbau innerhalb der Feder (43) gegenüber der Bespannung (21) vornimmt und die entstandene Wegstrecke innerhalb der Feder (43) nach der Fixierung des Kunststoffteils (52) (bei Figur 1=18) mit dem Gehäuse (3) über das Justierelement (49) und dem Zahnbolzen (34) über das Zahnrad (42) welches mit dem Justierteil (52) verankert ist gemessen und über die Kralle (41) angezeigt wird wobei über die Gesamtwegstrecke (44) der Sensor und das Blockteil (45) auf die Position (19) auffährt die mechanische Messung begrenzt und über den Sensor (45) der Batterie ( 47) und dem Signalgeber (48) das Messende signalisiert.
b.) Einem Geräteinstellsystem welches über die Justierschraube (35) dem Justierelement (49) gegenüber dem Auflageteil (24+25) über eine Schraubvorrichtung verstellbar ist und die Grundeinstellung für den Justierpunkt (37) eingestellt wird.

4. Messprüfgerät gemäß Figur 4, nach Anspruch 1, **dadurch gekennzeichnet, dass** es mit Figur 1 identisch ist und sich über die Positionen (29,30,31.32.33) als Ballprüfgerät umfunktioniert ist, indem ein Tennisball (31) über die Ballzentrierung (32) in das Gehäuse (29) gelegt wird und der Messvorgang mit Figur 1 gleich bleibend verhält und die ermittelten und abzulesenden Werte mit Tabellen von Tennisbällen verglichen wird, weiche zuvor über eine große Stückzahl von neuen Tennisbällen verschiedener Fabrikate und Ausführungen ermittelt wurden.

5. Messprüfgerät gemäß Figur 5, nach Anspruch 1, **dadurch gekennzeichnet, dass** alle Positionen von Figuren 1 und 3 identisch sind jedoch die Auflageprüffläche entsprechend dem Messdruck nicht über den Balschlägerrahmen (22) sondern über die Bespannungsfläche (21) erfolgt.

6. Messprüfgerät nach Anspruch 1, **dadurch gekennzeichnet, dass** mittels einer beweglichen Druckauflage (24-25) wie in Figur 5 und einer beweglichen Ausgleichswippe und Einstellvorrichtung (14,17,50), mögliche Unebenheiten aus der Drucktaste (9) und der Bespannung (21) direkt ausgeglichen werden, ohne negativen Einfluss auf die Messvorgänge,

## Geänderte Patentansprüche

### Geänderte Patentansprüche gemäss Regel 86(2) EPÜ.

**1.** Gerät zur Messung der Bespannungshärte und der Bespannungselastizität von Ballschlägerkopfbespannurtgen, insbesondere von Tennisschlägern, die Schläger bestehend aus einem Handgriff und einem runden beziehungsweise ovalen Schlägerkopf, dessen Rahmen mit Kabeln, auch Saiten genannt, quadratisch netzartig so bespannt ist, dass die Maschenweite der Bespannung beim Schlagschwung geringen Luftwiderstand besitzt, **dadurch gekennzeichnet, dass** das Gerät aus folgenden Bauelementen und Bauelementgruppen besteht;
a. aus dem Gerätgehäuse (3), das zur Ermittlung der zu messenden Werte mit der Grundfläche zentrisch auf den Schlägerrahmen gelegt wird,
b. einem Druckelement (9), mit welchem die Schlägerrahmengrösse mittels der Einstellvorrichtung (19) ermittelt wird,
c. einem Federsystem (1,6,8,18B,51), zur Justierung der Vorspannung vor der Messprozedur bei Auflage von Auflageteil (24 und 25) auf die Bespannung (21),
d. einer am Druckelement (9) angebrachten Justierschraube (14), welche den beginnenden Messdruck auf die geeichte Blattfeder (17) mit Dehnungsstreifen einstellbar macht,
e. den kombinierten Teilen mit Feder (8), Verbindungsteil (18) mit Feder (18B), Feder (6) die auf die Teile (3A,4,5,6,7) einwirkt, so, dass das erhaltene System als Ganzes mit dem Gehäuse (3) fixiert wird,
f. nach fixierten Teilen gemäß e. wird mittels mit den kombinierten Teilen, Feder (8), die Blattfeder (17), Ausgleichswippe (16) und die Druckauflage (24 und 25) auf die Schlägerbespannung wirkend in einem getrennten Schritt der Messvorgang vollzogen und der Messwert wird in Kp auf Display (12) gezeigt.

**2.** Gerät gemäß Anspruch 1, basierend auf Figur 1, zur Messung der Bespannungselastizität von Ballschlägern, **dadurch gekennzeichnet, dass** über den Vorlaufweg (23) die Messung der Bespannungshärte durch die Sensoren (18A) und dem Kontakt des Nachlaufstreckenteils (28) elektronisch abgeschlossen ist und über Feder (27), die erweiterte Messprozedur der Messung der Bespannungselastizität des Schlägerkopfes bis zur mechanischen Endblockade auf das Teil 19 über die Messtrecke (26A) ermöglicht wird und alle anderen Vorgänge wie gemäß Anspruch 1 gleichbleibend sind und beide Werte, der Bespannungshärte sowie der Dehnbarkeit der Bespannung (21) über die Elektronik (11,12,13) angezeigt werden

**3.** Gerät nach Anspruch 1, basierend auf Figur 1, zur Messung der Tennisballelastizität, **dadurch gekennzeichnet, dass** auf identischen Funktionsbasis von Anspruch 1, mittels der Positionen (29,30,31,32 ,33) als Ballprüfgerät Anwendbar ist, indem ein Tennisball (31) über Ballzentrierung (32) in das Compartment (29) gelegt wird, die Messprozedur wie mit Figur 1 ist und die ermittelten Werte auf Display 12 angezeigt werden.

**4.** Gerät nach Anspruch 1, **dadurch gekennzeichnet, dass** das Gerät, mit dessen Standbasis, anstatt auf Rahmen (22), direkt auf Bespannung (21) gelegt wird und alle Messprozeduren ansonsten adäquat sind.
